# EUROPEAN PATENT SPECIFICATION

(11) **EP 3 025 112 B1**
(45) Date of publication and mention of the grant of the patent: **15.05.2019**
(21) Application number: 14829207.1
(22) Date of filing: 23.07.2014
(51) Int. Cl.: F28F 13/12, H05B 3/80, G05D 23/19, B01L 7/02, A47J 27/10, A47J 36/32, A47J 27/18

(54) **HEATING CIRCULATOR**
ERWÄRMUNGSZIRKULATOR
CIRCULATEUR DE CHAUFFAGE

(30) Priority: 24.07.2013 US 201361857792 P
(43) Date of publication of application: 01.06.2016
(73) Proprietor: Anova Applied Electronics, Inc., San Francisco, CA 94105 (US)
(72) Inventor: WU, Jeff, Stafford, Texas 77477 (US)
(74) Representative: Electrolux Group Patents
(86) International application number: PCT/US2014/047838
(87) International publication number: WO 2015/013417

(56) References cited:
- EP-A1- 1 561 409
- JP-A- 2005 044 740
- US-A1- 2008 218 493
- US-A1- 2008 218 493
- US-A1- 2008 260 557
- US-A1- 2009 093 983
- US-A1- 2009 093 983
- US-A1- 2010 090 656
- US-A1- 2012 053 747
- US-A1- 2013 091 883
- US-B1- 6 763 879
- US-B2- 6 604 917
- US-B2- 8 087 822
- US-B2- 8 087 822
- US-B2- 8 469 678
- US-B2- 8 469 678

## Description

### FIELD OF TECHNOLOGY

The present disclosure relates generally to laboratory, industry, commercial and home devices, and more specifically, to precision temperature control devices that can be used to circulate heat transfer fluids.

### BACKGROUND

Heating circulators, also called "bath circulators", "refrigerated and heating circulators" or "chillers" are used in lab and industry applications for temperature control of various apparatus and materials, and also for heat removal purposes. Bath circulators have been used in labs and industrial operations since the early 1950s. One of the functions of a bath circulator is to control the temperature of a bath. Some systems have heating and cooling capabilities and are designed to very precisely regulate temperatures with 0.01° C precision. Circulator systems can control temperatures ranging from -80° C to + 400° C.

Document US 8469678 B2 concerns a constant temperature circulator. JP 2005044740 A is related to an under-liquid heater with a built-in low-liquid heating sensor. EP 1561409 A1 discloses a method of preparing food by the use of a kitchen device as well as a kitchen device. Document US 8087822 B2 discloses a liquid container capable of self-generating power and showing temperature. US 2008/0218493 A1 discloses a display with motion sensor. US 2009/0093983 A1 is related to a method and a system for measuring the fill level of a material.

### BRIEF DESCRIPTION OF THE DRAWINGS

In order to describe a manner in which features of the disclosure can be obtained, reference is made to specific embodiments that are illustrated in the appended drawings. Based on an understanding that these drawings depict only example embodiments of the disclosure and are not intended to be limiting of scope, the principles herein are described and explained with additional specificity and detail through the use of the accompanying drawings in which:
FIG. 1 illustrates a fluidic temperature control device in accordance with one embodiment of this disclosure;
FIG. 2 illustrates a fluidic temperature control device in use in accordance with one embodiment of this disclosure.
FIG. 3 illustrates a block diagram of a fluidic temperature control device in accordance with one embodiment of this disclosure;
FIG. 4 illustrates a block diagram of an enclosure component of a fluidic temperature control device in accordance with one embodiment of this disclosure;
FIG. 5 illustrates a block diagram of a chamber component of a fluidic temperature control device in accordance with one embodiment of this disclosure;
FIG. 6 illustrates a perspective view of a fluidic temperature control device in accordance with one embodiment of this disclosure;
FIG. 7 illustrates a rear view of a fluidic temperature control device in accordance with one embodiment of this disclosure;
FIG. 8 illustrates an enlarged view of an enclosure component of a fluidic temperature control device 100 in accordance with one embodiment of this disclosure;
FIG. 9 illustrates an enlarged view of the enclosure, heater, and temperature sensing components of a fluidic temperature control device in accordance with one embodiment of this disclosure.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

Several definitions that apply throughout this document will now be presented. "Heating Circulator" may also refer to devices that both heat and cool. "Circulating" means agitating, pumping, blending or mixing of one or more fluids. Hence a "circulator" is a device which can be configured to agitate, pump blend or mix a fluid. Fluids will be understood to comprise liquids. "Coupled" means connected, whether directly or indirectly through intervening components and is not necessarily limited to physical connections. Devices which are in signal communication with one another are coupled. "Connected" means directly connected or indirectly connected, and includes, but is not limited to physical or mechanical connections.

Broadly speaking, this disclosure relates to a laboratory heating circulator for laboratory and industrial temperature control use. However, home and commercial uses are also contemplated within this disclosure.

In at least one embodiment, a heating circulator has a motion sensor designed to detect movement to turn on the circulator information display to show temperature info/ system status if users are near. Utilizing a motion sensor to modulate the amount of time a display is activated can extend the operational life of a circulator. Utilizing a motion sensor to automatically show information can reduce the need for users to touch and damage the circulator, thereby extending the operational life of the circulator, especially when touching the circulator increases the likelihood that the circulator will be contacted by hazardous or corrosive materials.

In at least one embodiment, the heating circulator has a multi-function hose connector located on the fluid ejection outlet/inlet that can allow for multiple and different types or styles of hose/tube connection interfaces without using adapters.

In at least embodiment a heating circulator has cooker includes a Wi-Fi™/Blue Tooth™ radio to allow users to monitor status and control the system remotely.

In at least one embodiment of this disclosure, a heating circulator can include a liquid crystal display (LCD) and LCD interface elements such as LCD graphics and text can changes color dynamically based on the temperature of the bath or apparatus. For instance the background changes blue for subzero temperatures or change to red if the temperature is above 100°C.

In another embodiment, the heating circulator can sync (or couple) wirelessly or through cabling to allow one heating circulator to control other heating circulator systems or one PC to control multiple systems.

In another embodiment, the heating circulator can utilize a non-contact wireless infrared temperature thermometer to allow the system to take remote temperature readings of apparatus that is being temperature controlled by the heating circulator.

In another embodiment, the heating circulator can be configured to record and calculate total heat released by a particular apparatus and track the heat release over time to determine an end point of reactions or an end point of other industrial processes.

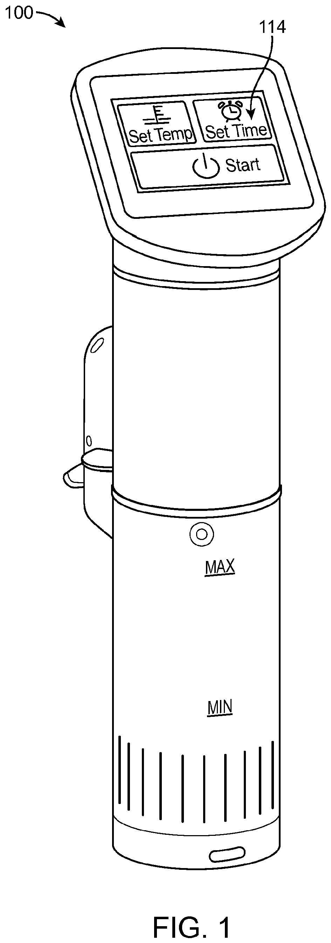

FIG. 1 illustrates a fluidic temperature control device 100 in accordance with one embodiment of this disclosure. As can be seen in FIG. 1, and as explained in greater detail below, the fluidic temperature control device 100 can include a Liquid Crystal Display (LCD) (114) which can be used to display information concerning the operations of the device 100 and by which a user can enter commands or instructions to control the operations of the device 100.

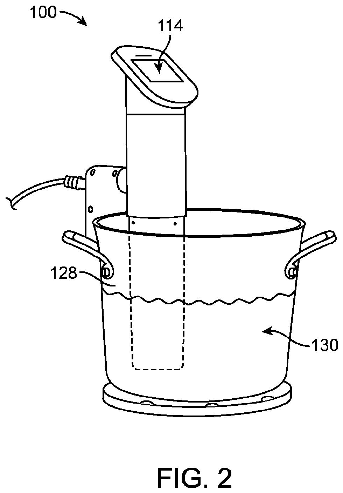

FIG. 2 illustrates a fluidic temperature control device 100 in use in accordance with one embodiment of this disclosure. As shown, the device 100 can be attached to a chamber 128 holding a bath fluid 130, such as water. As will be explained in greater detail, in at least one embodiment, a device 100 can incorporate a chamber 128. Also as shown, the device 100 can be at least partially submerged in the fluid bath 130 in order to regulate the temperature of the fluid bath 130.

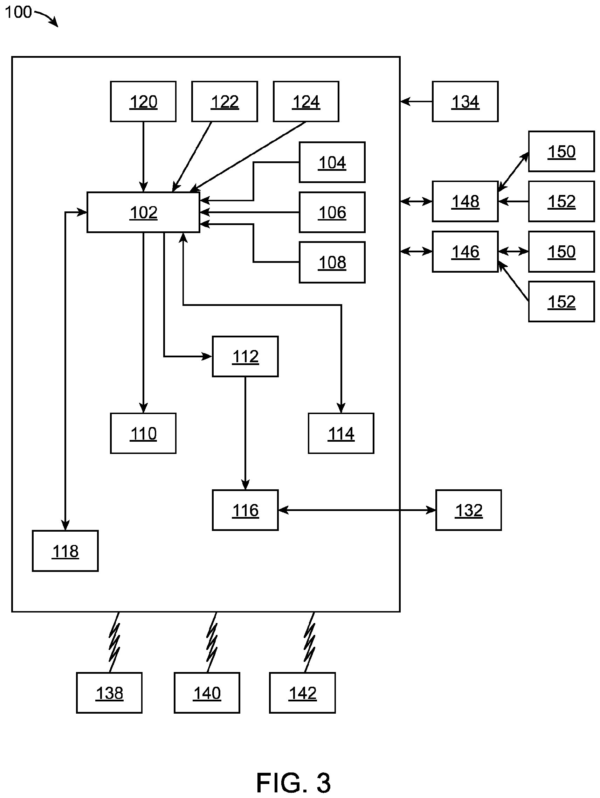

FIGS. 3-5 illustrate various aspects of a fluidic temperature control device 100 in block diagram form. A fluidic temperature device 100 can include at least one processor 102, at least one temperature sensor 104, at least one float sensor 106, and at least one dry sensor 108, coupled to the processor (102). A fluidic temperature device 100 can also include at least one heater 110, at least one pump motor 112 and at least one liquid crystal display (LCD) 114 which are also coupled to the processor 102. The device 100 can also include at least one pump 116 which can be connected to the pump motor 112. The fluidic temperature device 100 can also incorporate at least one input unit 118 coupled to the processor and configured to receive control instructions to control the operations of the device 100. The input unit 118 can be a keyboard, a touch pad, an LCD, a wireless receiver, or other suitable means for receiving instructions from a user or other controlling device.

The processor 102 of the device 100 can be configured to receive and process data from the temperature sensor 104 (for example, a thermometer), the float sensor 106 and the dry sensor 108, and output the processed temperature data, float sensor data and dry sensor data to the LCD (114) or to some external or remote device, such as a server or personal computing device. The processor 102 can be configurable or configured to interface with, and receive and process data from, at least one motion sensor 120, at least one wireless radio transmitter 122, and at least one infrared thermometer 124, and output the processed motion data, radio data, and infrared thermometer data to the LCD 114. A motion sensor 120 can, for example, enable the device 100 to display information on the LCD or other suitable display only when motion is detected nearby the device 100. The processor 102 can be configured to control the heater 110 and the pump motor 112 in accordance with the received control instructions, such as entered via the input unit 118 or received from an external electronic device 134. The LCD 114 can be configured to display information corresponding to processed data output from the processor 102. The LCD can also be configured to change the displayed color in accordance with the temperature of a fluid bath 130 being regulated by the device 100. In at least one embodiment the LCD (114) can configured to receive inputs, the inputs corresponding to commands for controlling the processor 102. Thus, in at least one embodiment, the LCD can act as a subsidiary or supplemental input unit 118.

In at least one embodiment, the motor driven pump 116, the processor 102, and the LCD 114 and any associated electronics 126 can be housed in an enclosure 136 or protective structure. In at least one embodiment, the heater 110, the temperature sensor 104, the float sensor 106 and the pump 116 can be positioned within a chamber 128 configured to hold a fluid bath 130. Additionally, the heater 110 of the device can be configured to heat the fluid bath 130 to a specific (preset) temperature modulated by the temperature sensor 104 and the processor 102. In at least one embodiment, the motor driven pump 116 can be configured to circulate the fluid bath 130 in order to insure temperature uniformity of fluid bath 130. Additionally, the motor driven pump 116 can be configured to pump fluid from the fluid bath 130 to an external apparatus 132, such as, for example, a chamber containing additional instruments.

In at least one embodiment, the device 100 can be configured such that a temperature of the fluid bath 130 is readable by the temperature sensor 104 and displayable on the LCD 114 or transmitted to some external device 134. Additionally, the device 100 can be configured such that if a temperature of the fluid bath 130 deviates from a preset temperature due to at least one external factor (such as, for example, a power outage or introduction of additional fluid into the chamber 128, the processor 102 will activate the at least one heater 110 to modulate the temperature of fluid bath 130 to the preset temperature. In at least one embodiment, the device 100 can be configured to receive at least one input to change the set temperature via the input unit 118.

In at least one embodiment, the device 100 can be configured to receive parameters sent from at least one externally located electronic device 134 or other remote source. The processor 102 can be configured to control the heater 110 and motor 112 in accordance with the received parameters (or additional instructions).

The motion sensor 120 can be located on the LCD 114 or somewhere else on the enclosure 136. The motion sensor 120 can be configured to activate the LCD 114 display if motion is detected near the device 100 and deactivate the LCD 114 upon detecting periods of inactivity, such as when no motion near the device has been detected for a predetermined period of time.

In at least one embodiment, the fluidic temperature control device 100 can be configurable to communicate wirelessly with at least one of a personal computer 138, a tablet computer 140, and a telephone 142 in order to control, send feedback, or be controlled by them. In at least one embodiment, the non-contact infrared thermometer 124 can interface with the fluidic temperature control device 100 and can be pointed in a direction of an apparatus 132 to which the device 100 is pumping temperature controlled fluid, in order to take temperature readings of the apparatus 132. The external temperature reading can, in at least one embodiment, be used to override the internal system temperature sensor 104 and can act as the primary temperature sensor 104 that the processor 102 is reading, thereby enabling the device 100 to adjust bath temperature to account for convective heat loss.

In at least one embodiment, the device 100 can be configured to calculate total energy released and used by an apparatus 132 using heat compensation or other methods while also tracking heat evolution/absorption over time.

In at least one embodiment, the motor driven pump 116 can include and external outlet 146 and inlet 148 having an integrated connector or additional adapter that can interface with multiple connector types on the same connector or adapter.

In at least one embodiment, the input unit 118 can be configured to receive voice commands. Additionally, the enclosure 136 can include a speaker configured to produce audio information corresponding to the operations of the device 100. In at least one embodiment, the motion sensor 120 can be configured to receive non-contact inputs to control the device 100. Thus, various methods by which a user can interact with the device 100, receiving information, visually and by sound, and enter commands, by voice or gestures, can enable the device 100 to be operated without making physical contact with the device 100.

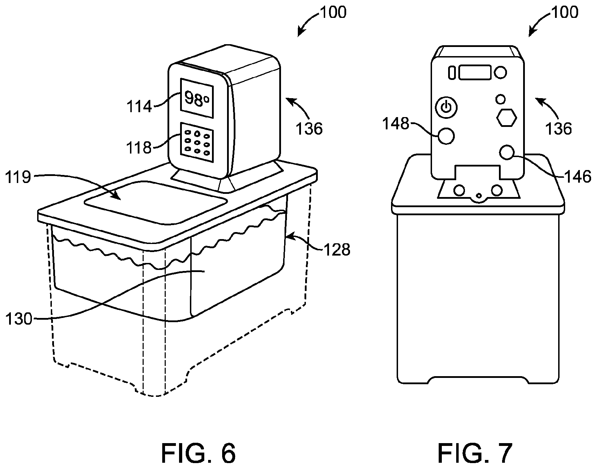

FIG. 6 illustrates a perspective view of the fluidic temperature control device 100. An LCD 114 and input unit 118 are shown integrated with the enclosure 136. The enclosure houses various device 100 components, as discussed above. Within the device 100 can be seen a chamber 128 containing a fluid bath 130. Various device 100 components, including a temperature sensor 104 and a heater 110 can be immersed in the fluid bath, as discussed above. The device 100 includes at least one opening 119 which can be a door or lid via which bath fluid 130 or other contents of the chamber 128 can be accessed.

FIG. 7 illustrates a rear view of the fluidic temperature control device 100. An outlet 146 and an inlet 148 are shown on the rear of the enclosure. The inlet 148 and outlet 146 can be used to pump fluid to an external apparatus 132, as discussed above.

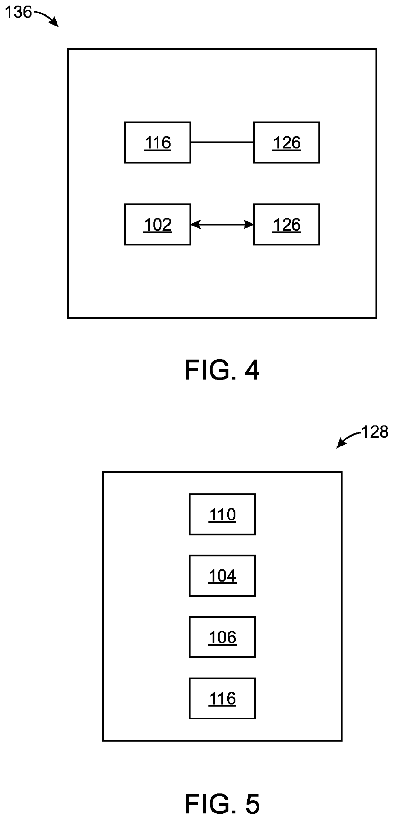

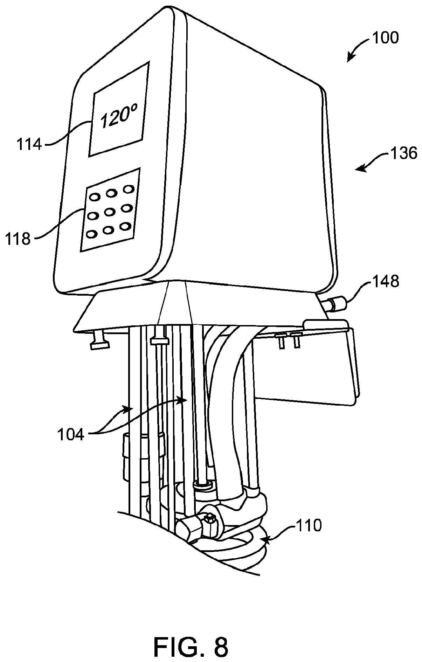

FIG. 8 illustrates an enlarged view of the enclosure 136, temperature sensor(s) 104 and heating element 110 of the fluidic temperature control device 100. Also visible is the inlet 148 described above. As in FIG. 4, an LCD 114 and input unit 118 are shown integrated with the enclosure 136.

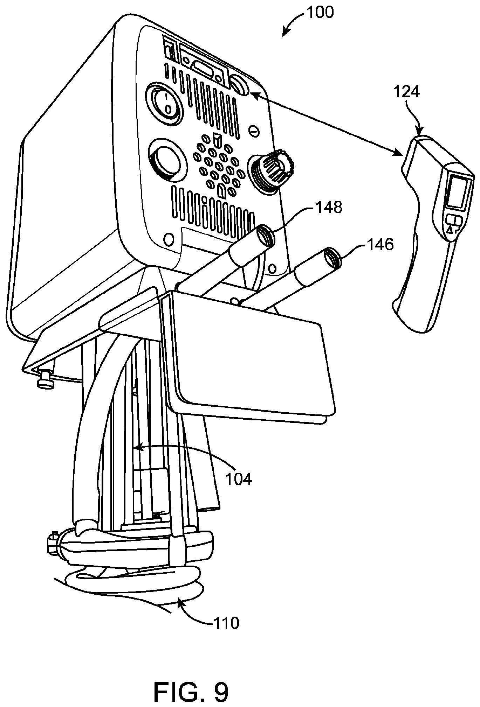

FIG. 9 illustrates an enlarged view of the enclosure 136, heater 110, and temperature sensor(s) 104. Also illustrated is a non-contact/infrared temperature sensing device 124, which can be used to collect data from the fluidic temperature control device 100 without making physical contact with the device 100.

The various embodiments described above are provided by way of illustration only and should not be construed to limit the scope of the disclosure or the following claims.

## Claims

1. A fluidic temperature control device (100)
comprising: at least one processor (102);
at least one temperature sensor (104), at least one float sensor (106), and at least one dry sensor (108), coupled to the processor (102);
at least one heater (110), at least one pump motor (112) and at least one liquid crystal display (LCD) (114), coupled to the processor (102);
at least one pump (116) connected to the pump motor (112); and
at least one input unit (118) coupled to the processor (102), the input unit (118) configured to receive control instructions,
wherein the processor (102) is configured to receive and process data from the temperature sensor (104), the float sensor (106) and the dry sensor (108), and output the processed temperature data, float sensor data and dry sensor data to the LCD (114);
the processor (102) is configurable to interface with, and receive and process data from, at least one motion sensor (120), at least one wireless radio transmitter (122), and at least one infrared thermometer (124), and output the processed motion data, radio data, and infrared thermometer data to the LCD (114);
the processor (102) is further configured to control the heater (110) and the pump motor (112) in accordance with the received control instructions; and
the LCD (114) is configured to display information corresponding to processed data output from the processor (102).

2. The fluidic temperature control device (100) of claim 1, wherein the motor driven pump (116), the processor (102), and the LCD (114) and associated electronics (126) are housed in an enclosure (136).

3. The fluidic temperature control device (100) recited in claim 2, wherein the heater (110), the temperature sensor (104), the float sensor (106) and the pump (116) are positioned within a chamber (128) configured to hold a fluid bath (130).

4. The fluidic temperature control device (100) recited in claim 3, wherein the at least one heater (110) is configured to heat the fluid bath (130) to a specific temperature controlled by the temperature sensor (104) and the processor (102).

5. The fluidic temperature control device (100) recited in claim 4, wherein the motor driven
pump (116) is configured to circulate the fluid bath (130) in order to insure temperature uniformity of fluid bath (130).

6. The fluidic temperature control device (100) recited in claim 5, wherein the motor driven pump (116) is further configured to pump fluid from the fluid bath (130) to at least one external apparatus (132).

7. The fluidic temperature control device (100) recited in claim 6, wherein the device (100) is further configurable such that if a temperature of the fluid bath (130) deviates from a set
temperature due to at least one external factor, the processor (102) will activate the at least one heater (110) to control the temperature of fluid bath (130) to the set temperature.

8. The fluidic temperature control device (100) recited in claim 7, the device (100) further
configured to receive parameters sent from at least one externally located electronic device (134), and the processor (102) further configured to control the heater (110) and motor (112) in accordance with the parameters.

9. The fluidic temperature control device (100) of claim 1, wherein the motion sensor (120) is located on the LCD (114) or on the enclosure (136), the motion sensor (120) being configurable to activate the LCD (114) display if motion is detected near the device (100) and deactivate the LCD (114) upon detecting periods of inactivity.

10. The fluidic temperature control device (100) of claim 1, wherein the fluidic temperature control device (100) is configurable to communicate wirelessly with at least one of a personal computer (138), a tablet computer (140), and a telephone (142) in order to control, send feedback or be controlled by them.

11. The fluidic temperature control device (100) of claim 1, wherein the non-contact infrared
thermometer (124) interfaces with the fluidic temperature control device (100) and can be pointed in a direction of an apparatus (132) to which the device (100) is pumping temperature controlled fluid, in order to take temperature readings of the apparatus (132),
wherein the external temperature reading can override the internal system temperature sensor (104) and can act as the primary temperature sensor (104) that the processor (102) is reading, thereby enabling the device (100) to adjust bath temperature to account for convective heat loss.

12. The fluidic temperature control device (100) of claim 1, the device (100) being configurable to calculate total energy released and used by an apparatus (132) using heat
compensation while also tracking heat evolution/absorption over time.

13. The fluidic temperature control device (100) of claim 2, wherein the motor driven pump
(116) includes an external outlet (146) and inlet (148) having at least one of an integrated connector (150) and an adapter (152) that can interface with multiple connector types.

14. The fluidic temperature control device (100) of any one of the preceding claims,
wherein the input unit (118) is configured to receive voice commands.

15. The fluidic temperature control device (100) of any one of the preceding claims,
wherein motion sensor (120) is configured to receive non-contact inputs to control the device (100).

## Patentansprüche

1. Strömungstechnische Temperaturregelvorrichtung (100), umfassend:
mindestens einen Prozessor (102);
mindestens einen Temperatursensor (104), mindestens einen Schwimmsensor (106) und mindestens einen Trockensensor (108), gekoppelt mit dem Prozessor (102);
mindestens ein Heizelement (110), mindestens einen Pumpenmotor (112) und mindestens eine Flüssigkristallanzeige (LCD) (114), gekoppelt mit dem Prozessor (102);
mindestens eine mit dem Pumpenmotor (112) verbundene Pumpe (116); und
mindestens eine mit dem Prozessor (102) gekoppelte Eingabeeinheit (118), wobei die Eingabeeinheit (118) konfiguriert ist, um Steuerbefehle zu empfangen,
wobei der Prozessor (102) konfiguriert ist, um Daten vom Temperatursensor (104), vom Schwimmsensor (106) und vom Trockensensor (108) zu empfangen und zu verarbeiten sowie die verarbeiteten Temperaturdaten, Schwimmsensordaten und Trockensensordaten an das LCD (114) auszugeben;
wobei der Prozessor (102) konfigurierbar ist, um als Schnittstelle Prozessdaten von mindestens einem Bewegungssensor (120), mindestens einem Funksender (122) und mindestens einem Infrarotthermometer (124) zu empfangen und zu verarbeiten sowie die verarbeiteten Bewegungsdaten, Funkdaten und Infrarotthermometerdaten an das LCD (114) auszugeben;
wobei der Prozessor (102) weiterhin konfiguriert ist, um das Heizelement (110) und den Pumpenmotor (112) in Übereinstimmung mit den empfangenen Steuerbefehlen zu regeln; und
wobei das LCD (114) konfiguriert ist, um Informationen anzuzeigen, die verarbeiteten Datenausgaben des Prozessors (102) entsprechen.

2. Strömungstechnische Temperaturregelvorrichtung (100) nach Anspruch 1, wobei die motorbetriebene Pumpe (116), der Prozessor (102) und das LCD (114) sowie zugehörige Elektronik (126) in einem Gehäuse (136) untergebracht sind.

3. Strömungstechnische Temperaturregelvorrichtung (100) nach Anspruch 2, wobei das Heizelement (110), der Temperatursensor (104), der Schwimmsensor (106) und die Pumpe (116) innerhalb einer Kammer (128) positioniert sind, die zum Aufnehmen eines Fluidbads (130) konfiguriert ist.

4. Strömungstechnische Temperaturregelvorrichtung (100) nach Anspruch 3, wobei das mindestens eine Heizelement (110) konfiguriert ist, um das Fluidbad (130) auf eine vom Temperatursensor (104) und vom Prozessor (102) geregelte spezifische Temperatur zu erwärmen.

5. Strömungstechnische Temperaturregelvorrichtung (100) nach Anspruch 4, wobei die motorbetriebene Pumpe (116) konfiguriert ist, um das Fluidbad (130) umzuwälzen, so dass eine einheitliche Temperatur des Fluidbads (130) sichergestellt ist.

6. Strömungstechnische Temperaturregelvorrichtung (100) nach Anspruch 5, wobei die motorbetriebene Pumpe (116) weiterhin konfiguriert ist, um Fluid vom Fluidbad (130) zu mindestens einem externen Apparat (132) zu pumpen.

7. Strömungstechnische Temperaturregelvorrichtung (100) nach Anspruch 6, wobei die Vorrichtung (100) weiterhin so konfigurierbar ist, dass, wenn eine Temperatur des Fluidbads (130) von einer festgelegten Temperatur aufgrund mindestens eines externen Faktors abweicht, der Prozessor (102) das mindestens eine Heizelement (110) aktiviert, um die Temperatur des Fluidbads (130) auf die festgelegte Temperatur zu regeln.

8. Strömungstechnische Temperaturregelvorrichtung (100) nach Anspruch 7, wobei die Vorrichtung (100) weiterhin konfiguriert ist, um von mindestens einer extern befindlichen elektronischen Vorrichtung (134) gesendete Parameter zu empfangen, und wobei der Prozessor (102) weiterhin konfiguriert ist, um das Heizelement (110) und den Motor (112) in Übereinstimmung mit den Parametern zu regeln.

9. Strömungstechnische Temperaturregelvorrichtung (100) nach Anspruch 1, wobei sich der Bewegungssensor (120) am LCD (114) oder am Gehäuse (136) befindet, und wobei der Bewegungssensor (120) konfigurierbar ist, um das LCD (114) zu aktivieren, wenn nahe der Vorrichtung (100) eine Bewegung ermittelt wird, sowie das LCD (114) zu deaktivieren, wenn Inaktivitätszeiten ermittelt werden.

10. Strömungstechnische Temperaturregelvorrichtung (100) nach Anspruch 1, wobei die strömungstechnische Temperaturregelvorrichtung (100) konfigurierbar ist, um drahtlos mindestens mit einem Personalcomputer (138), einem Tabletcomputer (140) oder einem Telefon (142) zu kommunizieren, um eine Regelung zu bewirken, Feedback zu senden oder von diesen geregelt zu werden.

11. Strömungstechnische Temperaturregelvorrichtung (100) nach Anspruch 1, wobei das kontaktlose Infrarotthermometer (124) eine Schnittstelle mit der strömungstechnischen Temperaturregelvorrichtung (100) aufweist und hin zu einem Apparat (132) ausgerichtet werden kann, dem von der Vorrichtung (100) temperaturgeregeltes Fluid zugepumpt wird, um so Temperaturmesswerte des Apparats (132) abzulesen,
wobei der externe Temperaturmesswert den internen Systemtemperatursensor (104) überschreiben und als der primäre Temperatursensor (104) für den ablesenden Prozessor (102) dienen kann, so dass die Vorrichtung (100) in der Lage ist, die Badtemperatur einzustellen, um Konvektionswärmeverlusten Rechnung zu tragen.

12. Strömungstechnische Temperaturregelvorrichtung (100) nach Anspruch 1, wobei die Vorrichtung (100) konfigurierbar ist, um die von einem Apparat (132) freigegebene und verbrauchte Gesamtenergie unter Nutzung einer Wärmeausgleichsberechnung zu berechnen und gleichfalls auch die Wärmeentwicklung/Wärmeaufnahme zeitlich nachzuverfolgen.

13. Strömungstechnische Temperaturregelvorrichtung (100) nach Anspruch 2, wobei die motorbetriebene Pumpe (116) einen externen Auslass (146) und einen Einlass (148) mit mindestens einem integrierten Verbinder (150) oder einem Adapter (152) als mögliche Schnittstelle mit Mehrfachverbinderausführungen beinhaltet.

14. Strömungstechnische Temperaturregelvorrichtung (100) nach einem der vorstehend aufgeführten Ansprüche, wobei die Eingabeeinheit (118) konfiguriert ist, um Sprachbefehle zu empfangen.

15. Strömungstechnische Temperaturregelvorrichtung (100) nach einem der vorstehend aufgeführten Ansprüche, wobei der Bewegungssensor (120) konfiguriert ist, um kontaktlose Eingaben zur Regelung der Vorrichtung (100) zu empfangen.

## Revendications

1. Dispositif de régulation de température fluidique (100) comprenant :
au moins un processeur (102) ;
au moins un capteur de température (104), au moins un capteur flottant (106) et au moins un capteur sec (108), couplés au processeur (102) ;
au moins un dispositif de chauffage (110), au moins un moteur de pompe (112) et au moins un afficheur à cristaux liquides (LCD) (114), couplés au processeur (102) ;
au moins une pompe (116) raccordée au moteur de pompe (112) ; et
au moins une unité d'entrée (118) couplée au processeur (102), l'unité d'entrée (118) étant configurée pour recevoir des instructions de contrôle,
dans lequel le processeur (102) est configuré pour recevoir et traiter des données provenant du capteur de température (106), du capteur flottant (106) et du capteur sec (108), et délivrer les données de température, données de capteur flottant et données de capteur sec traitées au LCD (114) ;
le processeur (102) est configurable pour interagir avec, et recevoir et traiter des données provenant de, au moins un capteur de mouvement (120), au moins un émetteur radio sans fil (122) et au moins un thermomètre infrarouge (124), et délivrer les données de mouvement, données radio et données de thermomètre infrarouge traitées au LCD (114) ;
le processeur (102) est également configuré pour contrôler le dispositif de chauffage (110) et le moteur de pompe (112) en fonction des instructions de contrôle reçues ; et
le LCD (114) est configuré pour afficher des informations correspondant à des données traitées délivrées depuis le processeur (102).

2. Dispositif de régulation de température fluidique (100) de la revendication 1, dans lequel la pompe motorisée (116), le processeur (102) et le LCD (114) et l'électronique associée (126) sont logés dans un boîtier (136) .

3. Dispositif de régulation de température fluidique (100) selon la revendication 2, dans lequel le dispositif de chauffage (110), le capteur de température (104), le capteur flottant (106) et la pompe (116) sont positionnés à l'intérieur d'une chambre (128) configurée pour contenir un bain de fluide (130).

4. Dispositif de régulation de température fluidique (100) selon la revendication 3, dans lequel l'au moins un dispositif de chauffage (110) est configuré pour chauffer le bain de fluide (130) jusqu'à une température spécifique régulée par le capteur de température (104) et le processeur (102).

5. Dispositif de régulation de température fluidique (100) selon la revendication 4, dans lequel la pompe motorisée (116) est configurée pour établir une circulation dans le bain de fluide (130) afin d'assurer une uniformité de température du bain de fluide (130).

6. Dispositif de régulation de température fluidique (100) selon la revendication 5, dans lequel la pompe motorisée (116) est également configurée pour pomper un fluide à partir du bain de fluide (130) jusqu'à au moins un appareil externe (132).

7. Dispositif de régulation de température fluidique (100) selon la revendication 6, le dispositif (100) étant également configurable de telle sorte que, si une température du bain de fluide (130) s'écarte d'une température réglée en raison d'au moins un facteur externe, le processeur (102) activera l'au moins un dispositif de chauffage (110) pour réguler la température du bain de fluide (130) à la température réglée.

8. Dispositif de régulation de température fluidique (100) selon la revendication 7, le dispositif (100) étant également configuré pour recevoir des paramètres envoyés depuis au moins un dispositif électronique (134) situé à l'extérieur, et le processeur (102) étant également configuré pour contrôler le dispositif de chauffage (110) et le moteur (112) en fonction des paramètres.

9. Dispositif de régulation de température fluidique (100) de la revendication 1, dans lequel le capteur de mouvement (120) est situé sur le LCD (114) ou sur le boîtier (136), le capteur de mouvement (120) étant configurable pour activer l'afficheur LCD (114) si un mouvement est détecté à proximité du dispositif (100) et désactiver le LCD (114) lors de la détection de périodes d'inactivité.

10. Dispositif de régulation de température fluidique (100) de la revendication 1, le dispositif de régulation de température fluidique (100) étant configurable pour communiquer sans fil avec au moins un élément parmi un ordinateur personnel (138), une tablette (140) et un téléphone (142) afin de contrôler, envoyer un retour d'informations ou être contrôlé par eux.

11. Dispositif de régulation de température fluidique (100) de la revendication 1, dans lequel le thermomètre infrarouge sans contact (124) interagit avec le dispositif de régulation de température fluidique (100) et peut être pointé dans une direction d'un appareil (132) vers lequel le dispositif (100) pompe un fluide régulé en température, afin de prendre des lectures de température de l'appareil (132),
dans lequel la lecture de température externe peut l'emporter sur le capteur de température interne (104) du système et peut agir comme le capteur de température principal (104) que lit le processeur (102), permettant ainsi au dispositif (100) de régler la température du bain pour tenir compte de la perte de chaleur par convection.

12. Dispositif de régulation de température fluidique (100) de la revendication 1, le dispositif (100) étant configurable pour calculer l'énergie totale libérée et utilisée par un appareil (132) utilisant une compensation de chaleur tout en suivant également l'évolution/ l'absorption de chaleur dans le temps.

13. Dispositif de régulation de température fluidique (100) de la revendication 2, dans lequel la pompe motorisée (116) comporte une sortie externe (146) et une entrée (148) ayant un connecteur intégré (150) et/ou un adaptateur (152) qui peuvent interagir avec de multiples types de connecteur.

14. Dispositif de régulation de température fluidique (100) de l'une quelconque des revendications précédentes, dans lequel l'unité d'entrée (118) est configurée pour recevoir des commandes vocales.

15. Dispositif de régulation de température fluidique (100) de l'une quelconque des revendications précédentes, dans lequel le capteur de mouvement (120) est configuré pour recevoir des entrées sans contact pour contrôler le dispositif (100).
